# EUROPEAN PATENT APPLICATION

(11) **EP 0 872 584 A1**
(43) Date of publication of application: **21.10.1998**
(21) Application number: 98106756.4
(22) Date of filing: 14.04.1998
(51) Int. Cl.: D02J 13/00, D02J 1/22, D06B 23/02

(54) **Temperature control apparatus for a heating roller**

(30) Priority: 15.04.1997 JP 96291/97
(71) Applicant: Murata Kikai Kabushiki Kaisha, Minami-ku, Kyoto-shi, Kyoto 601 (JP)
(72) Inventor: Oshiumi, Koichiro, Kyoto-shi, Kyoto (JP)
(74) Representative: Liedl, Christine, Dipl.-Chem.

(57) **Abstract**

To provide a temperature control apparatus for a heating roller that remains operative upon detecting an error in the temperature detection element for control in order to continue controlling the temperature using another normal temperature detection element, thereby enabling an inspection while the machine is completely stopped. A temperature control apparatus for a heating roller comprises a plurality of temperature detection elements 21 and 22 for detecting the temperature of a roller, and a control means for controlling the temperature of a heating means 4 using the output from the temperature detection element 21, the control means comprising an error detection means 32 for detecting an error in the temperature detection element 21, and a switching means 32 operative when the error detection means 32 detects an error in the particular temperature detection element 21 in order to continue controlling the temperature of the heating means 4 using the output from the other temperature detection element 22.

## Description

### Field of the Invention

The present invention relates to a temperature control apparatus for a heating roller that guides yarns wound around the outer circumference thereof to heat the yarns.

### Background of the Invention

A take-up winder uses a heating roller to draw synthetic yarns in order to wind them. The synthetic yarns are passed around a plurality of rollers and fed by rotating the respective rollers. At the same time, the synthetic yarns are heated when wound around the outer circumferences of the rollers. If the plurality of roller rotate at different circumferential speeds, the tension causes the heated synthetic yarns to be drawn between the plurality of rollers. The ratio between the circumferential speeds of the plurality of rollers is equal to their drawing ratio.

Some of such rollers have a built-in heating means so that the outer circumference of the roller can be controlled in order to maintain a constant temperature. The heating means is, for example, a heater that is wound around the outer circumference of a fixed cylinder disposed in proximity to a rotating cylinder of the roller and that heats the rotating cylinder rotating around the heater. Temperature detection elements for measuring the temperature of the heated roller are mounted on the roller so that the heating of the heating means is controlled depending on the outputs from the temperature detection elements.

Since the temperature detection elements are buried in the rotating section on the outer circumference of the roller or provided in proximity thereto, errors may occur due to mechanical damage. When an error occurs in a temperature detection element, the temperature of the roller deviates from a specified value, thereby preventing drawn yarns of specified quality from being obtained. Thus, the rotating heating roller is stopped for inspections, but a substantial amount of time is required before operation can be resumed after cooling, inspections, and heating. In addition, only the downstream side is stopped for inspection without stopping the output of yarns from the upstream side spinning machine, resulting in a large amount of resin being output uselessly.

Thus, to continue operation instead of immediately stopping it even if an error occurs in one of the temperature detection elements, the temperature detection elements are located at these two positions on the outer circumference of the roller that are symmetrical relative to a rotating shaft so that the outputs from the elements are averaged for control. In this case, an error in one of the temperature detection elements does not completely stop the output, but the output level may be decreased, resulting in inaccurate temperature control. In addition, one of the two temperature detection elements may be used to control the temperature while the other may be used to detect an error, but since these elements are connected to different control apparatuss, the roller must also be stopped for inspection if the temperature detection element for control becomes defective.

The present invention is provided in view of these problems of the prior art, and its object is to provide a temperature control apparatus for a heating roller that remains operative upon detecting a error in the temperature detection element for control in order to continue controlling the temperature using another normal temperature detection element, thereby enabling an inspection to be conducted while the machine is completely stopped.

### Summary of the Invention

To achieve this object, the present invention is a temperature control apparatus for a heating roller that guides yarns wound around the outer circumference of a roller with a heating means in order to heat the yarns, characterized in that the control apparatus comprises a plurality of temperature detection elements for detecting the temperature of the roller, and a control means for controlling the temperature of the heating means using the outputs from one or more of the temperature detection elements, the control means comprising an error detection means for detecting an error in the temperature detection elements, and a switching means operative when the error detection means detects an error in a particular temperature detection element in order to continue controlling the temperature of the heating means using the output from the other temperature detection element.

According to the present invention, the error detection means and the switching means are shared by said plurality of temperature detection elements.

According to the present invention, the error detection means compares the outputs from the plurality of temperature detection elements to detect an error in said particular temperature detection element.

### Brief Description of the Drawings

Figure 1 is a block diagram showing the components of a temperature control apparatus for a heating roller according to the present invention.

Figure 2 shows a waveform output from a plurality of temperature sensors in a rotating section of a roller.

Figure 3 is a flow chart for temperature control.

Figure 4 is a flow chart showing a subroutine for temperature control.

Figure 5 is a block diagram showing the components of another temperature control apparatus for a heating roller according to the present invention.

Figure 6 is a sectional view of a heating roller.

Figure 7 shows the layout of the components of a heating roller system.

### Detailed Description of the Preferred Embodiments

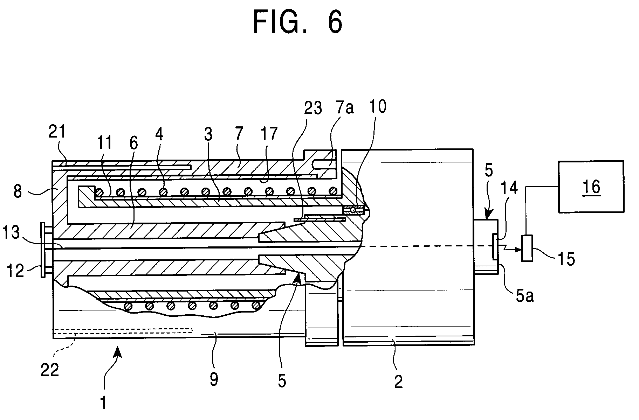

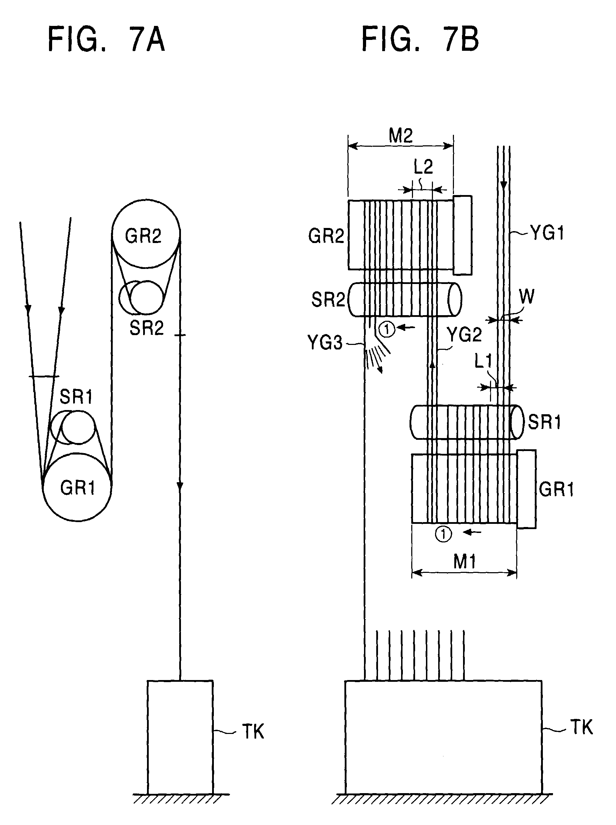

Embodiments of this invention are described with reference to the drawings. Before a temperature control apparatus for a heating roller is described, a heating roller system with an integrated heating roller and the structure of the heating roller are explained with reference to Figures 6 and 7.

Figure 7A is a front view of the system, and Figure 7B is a side view of the system. In these figures, the heating roller system has a set of a first heating roller GR1 and a first separator roller SR1 and a set of a second heating roller GR2 and a second separator roller SR2. Several (e.g., eight) synthetic yarns are pulled out from a spinning machine (not shown in the drawings), arranged in the horizontal direction in such a way as to have a width W (YG1), and pulled into the first heating roller GR1. The yarns are wound between the first heating roller GR1 and the first separator roller SR1 several times. In this case, the first separator roller SR1 is located in a diagonal direction so as to enable the group of synthetic yarns YG1 to be moved smoothly in the lateral direction relative to the first heating roller GR1.

In addition, the group of synthetic yarns YG2 exiting the first heating roller GR1 flow into the second heating roller GR2. They are then wound several times between the second heating roller GR2 and the second separator roller SR2 located in the diagonal direction. The group of synthetic yarns YG3 coming out of the second heating roller GR2 are expanded in the axial direction of the roller and wound around individual packages using a take-up winder TK. The synthetic yarns YG2 are drawn between the heating rollers GR1 and GR2. When the ratio between the circumferential speeds of the heating rollers GR1 and GR2 is, for example, 1.5, the yarns are drawn between the heating rollers GR1 and GR2 1.5 times. In other words, the drawing ratio = the circumferential speed of GR2/the circumferential speed of GR1. Synthetic yarns of nylon or polyester filaments are drawn into FDY (Fully Drawn Yarn) using a godet roller wherein the heating rollers GR1 and GR2 are rotating at different circumferential speeds.

As shown in Figure 7B, the group of synthetic yarns YG1 are wound between the first heating roller GR1 and the first separator roller SR1 several times and then between the second heating roller GR2 and the second separator roller SR2 several times. These yarns are subjected to a drive force and heated, and then induced into the take-up winder (not shown in the drawings) while maintaining a specified drawing ratio. To avoid interference between the group of synthetic yarns wound several times and adjacent synthetic yarns, the group of synthetic yarns YG1 over the first heating roller GR1 must be separated by a constant distance L1. Likewise, the group of synthetic yarns YG2 over the second heating roller GR2 must be separated by a constant distance L2. Due to the distances L1 and L2 and the winding number, the first and second heating rollers GR1 and GR2 have specified lengths M1 and M2.

The structure of the heating rollers GR1 and GR2 is described with reference to Figure 6.

A heating roller 1 constituting each of the heating rollers GR1 and GR2 consists of a rotating roller side and a fixed side. A hollow cylindrical core 3 with its tip on the left side in Figure 6 being open, and with its proximal end on the opposite side fixed to a motor section 2 is provided on the fixed side of the heating roller 1. The core 3 comprises a plurality of ferrite sheets 11 that are mounted on the outer circumference of a hollow cylinder consisting of a non-magnetic substance and that extend in the circumferential direction at a specified interval, and that has a specified length from its proximal end to its tip, with a fixed coil 4 wound around the outer circumference of the core 3 at a specified pitch. A rotating shaft 5 including a motor rotor (not shown in the drawing) is provided in the motor section 2.

Inside the core 3, a roller shaft portion 6 inserted into a core hollow portion is connected to the rotating shaft 5 of the motor section 2. A cylindrical roller outer casing portion 7 covering the fixed coil 4 is provided outside the core 3. The tip of the roller shaft portion 6 is connected to the tip of the roller outer casing portion 7 via disc-like roller tip portion 8. An induction heating body 17 such as iron is provided inside the roller outer casing portion 7 opposite to the coil 4, and the roller shaft portion 6, roller outer casing portion 7, and roller tip portion 8 are integrally formed of aluminum to reduce the weight of the apparatus. Synthetic yarns are wound around the outer circumference of this integral roller 9. A means for rotationally driving the roller 9 consists of the motor section 2 and a rotating-speed control circuit (not shown in the drawing).

The roller outer casing portion 7 has a first temperature sensor 21 as a first temperature detection element and a second temperature sensor 22 as a second temperature detection element for detecting the temperature of the roller 9, which are buried at positions symmetrical relative to the rotating shaft. In this embodiment, the first and second temperature sensors 21 and 22 are provided near the longitudinal center of the roller outer casing portion 7 in such a way as to be separated at 180° . One of the two temperature sensors 21 and 22 is used to control the temperature, while the other is used to detect an error. A third temperature sensor 23 as a third temperature detection element for a hearing 10 provided between the rotating shaft 6 and the motor section 2 is buried in the rotating shaft 6. The third temperature sensor 23 monitors the temperature of the bearing 10.

A circuit module 12 is mounted on the roller tip portion 8. Leads (not shown in the drawing) from the first, second, and third temperature sensors 21, 22 and 23 are connected to the circuit module 12. A lead 13 from the circuit module 12 is drawn into the roller shaft portion 6 and passes through the inside of the rotating shaft 5 of the motor section 2 to the rotating-shaft end 5a opposite to the roller 9. A roller side optical transmitter 14 that transmits data using light is mounted at the rotating-shaft end 5a. The optical axis of the roller side optical transmitter 14 corresponds to the center of the rotating shaft 5. A fixed optical receiver 15 is provided in such a way so as to correspond to the optical axis of the roller side optical transmitter 14. The output of the fixed optical receiver 15 is connected to a temperature regulating module 16.

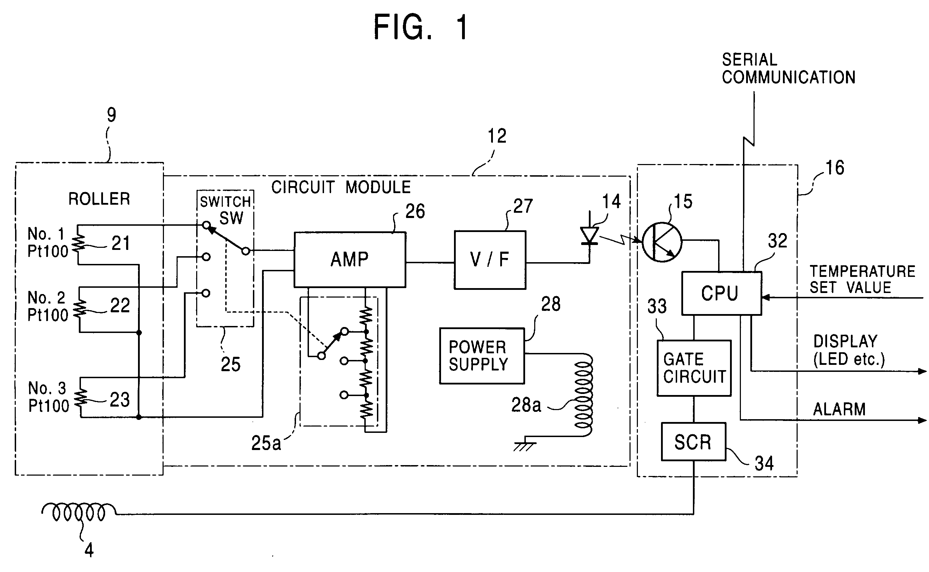

The body of the temperature control apparatus according to the present invention is explained with reference to Figures 1 to 5. Figure 1 is a block diagram showing the components of the temperature control apparatus for a heating roller according to the present invention.

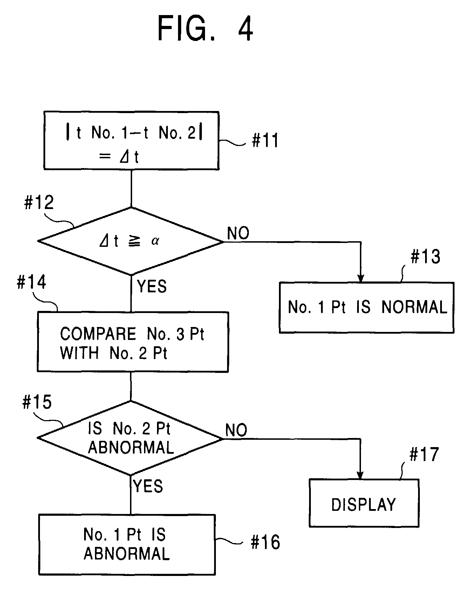

In Figure 1, 4 is the fixed coil, 9 is the roller, 12 is the circuit module, and 16 is the temperature regulating module. The first, second, third temperature sensors 21, 22 and 23 are buried at appropriate positions of the rotating portion of the roller 9, with their respective leads connected to a switch 25 in the circuit module 12.

The circuit module 12 on the rotary side comprises the switch 25 (a switch means), an amplifier 26, a waveform shaper 27, a light emitting diode 14, and a power supply 28. The switch 25 can switch the connection of the outputs from the first, second, and third temperature sensors 21, 22 and 23 at an equal time interval. In addition, the amplifier 25 has a resistance switching section 25a for changing a voltage value (an offset value) as a reference for each of the first, second, and third temperature sensors 21, 22 and 23, with the resistance switching section 25a operating in response to the switch 25. An analog output that varies the offset value for each of the temperature sensors 21, 22 and 23, and that is provided in a time sharing manner is converted into a digital signal of a specified frequency band by the waveform shaper 27. A pulse signal from the waveform shaper 27 is transmitted to the fixed optical receiver 15 from the light emitting diode 14 that is the optical transmitter 14.

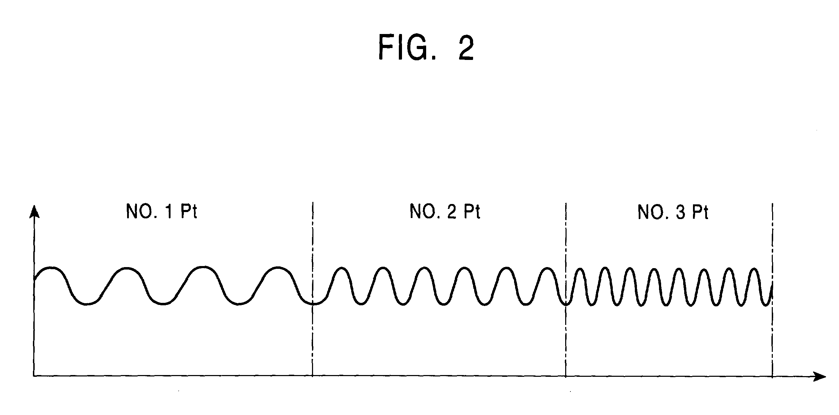

An example of output from the circuit module 12 on the rotary side is shown in Figure 2. The output from No. 1Pt that indicates the first temperature sensor 21 has a low frequency band, and the interval of the waveform enables the magnitude of the output to be determined. The output from No. 2Pt that indicates the second temperature sensor 22 has an intermediate frequency band, and the interval of the waveform enables the magnitude of the output to be determined. The output from No. 3Pt that indicates the third temperature sensor 23 has a high frequency band, and the interval of the waveform enables the magnitude of the output to be determined. By varying the frequency band for each of the temperature sensors, the output from each temperature sensor can be distinguished even if the signal is continuous in a time sharing manner.

Since the circuit module 12 is disposed on the rotary side, the power circuit 28 is supplied with power from the fixed side via an electromagnetic induction coil 28a to operate each circuit. As the outputs from the temperature sensors 21, 22 and 23 are each divided in a time sharing manner and have a specified frequency band, the circuit module 12 does not need to have a calculation function such as a CPU and the outputs from the plurality of temperature sensors can be processed simply.

The temperature regulating module 16 on the fixed side comprises the phototransistor 15 that is the fixed optical receiver, a central processing unit (CPU) 32, a gate circuit 33, and a thyrister (SCR) 34. The output from the phototransistor 15 is input to the CPU 32, which is controlled by serial communication with a host computer. The CPU 32 has specified programs integrated therein, determines the output from each of the temperature sensors 21, 22 and 23, and compares it with a specified temperature set value to execute required mathematic operations. Based on the results of the mathematic operations, the CPU 32 also drives the thyrister 34 via the gate circuit 33 to control the phase of a voltage supplied to the fixed coil 4, which is a heater, while outputting a required alarm or display.

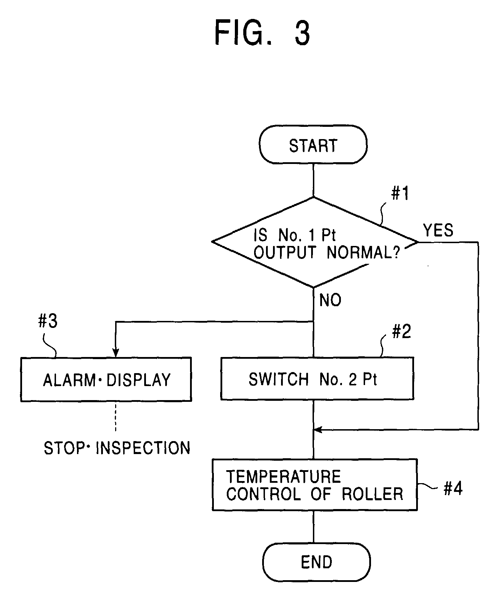

Figures 3 and 4 show the flow of mathematic operations using the programs integrated into the CPU 32. In Figure 3, the output from No. 1Pt that indicates the first temperature sensor 21 is extracted to determine whether it is normal (step #1). If the process determines that the output is abnormal (step #1, N0), No. 2Pt, which indicates the second temperature sensor 22 for error detection, is switched in such a way as to be used to control the temperature (step #2), and an alarm or a display is simultaneously output to inform the operator of the switching (step #3). After No. 2Pt, which indicates the second temperature sensor 22, has been switched in such a way as to be used to control the temperature, the output from the second temperature sensor 22 is still used to control the temperature of the roller (step #4). After the switching, the second temperature sensor 22 is used for both temperature control and error detection. The first temperature sensor 21 originally used for temperature control is inspected while the entire machine is stopped as in a periodic inspection. Therefore, if an error occurs in the first temperature sensor 21 for temperature control, the operation of the heating roller can be continued without immediately stopping it.

Figure 4 shows a subroutine for detecting an error in the first temperature sensor 21. If the first temperature sensor 21 is seriously damaged, as in a broken wired, the resistance becomes infinite and the output is reduced to zero, thereby enabling this error to be detected simply. A method for detecting an output value indicating an error less serious than a broken wired is described below. Since the second temperature sensor 22 for error detection is placed in a location under the same conditions as in the first temperature sensor 21, it should provide the same output as the first temperature sensor 21. Therefore, the difference Δt between the output t1 from the first temperature sensor 21 and the output t2 from the second temperature sensor 22 is calculated (step #11). The process determines whether Δt exceeds a specified range (step #12), and if not (step #13, NO), it determines that the first temperature sensor 21 is normal. If Δt exceeds (step #13, YES), the process detects the correlationship between the output from the third temperature sensor 23 for bearing temperature detection and the output from the second temperature sensor 22 for error detection (step #14) to determine whether the second temperature sensor 22 for error detection is normal (step #15). If so (step #15, YES), the process determines that the first temperature sensor 21 is abnormal (step #16), whereas if the second temperature sensor 22 is abnormal (step #15, NO), the process indicates that the second temperature sensor 22 is abnormal (step #17).

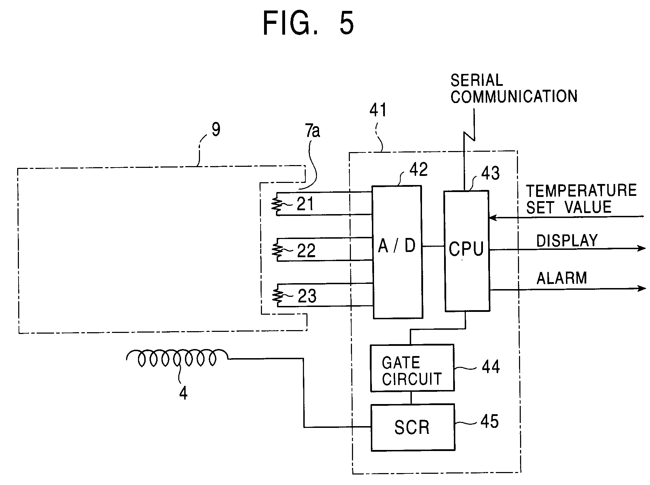

Figure 5 is a block diagram of another temperature control apparatus for a heating roller. This control apparatus differs from the control apparatus in Figure 1 in that the first, second, and third temperature sensors 21, 22 and 23 are disposed on the fixed side instead of on the rotor 6 on the rotary side. By inserting the detection end of the temperature sensor into a circumferential slit 7a in the end of the roller outer casing portion 7 in Figure 6, the first temperature sensor 21 for temperature control and the second temperature sensor 22 for error detection are provided on the fixed side, whereas by providing the third temperature sensor 23 for hearing temperature monitoring on the outer ring side of the bearing 10, the temperature sensors 21, 22 and 23 can be provided on the fixed side.

In this case, only the temperature control apparatus is a temperature regulating module 41 corresponding to the fixed side temperature regulating module in Figure 1. The temperature regulating module 41 comprises an A/D converter 42, a CPU 43, a gate circuit 44, and a thyrister 45. The outputs from the first, second, and third temperature sensors 21, 22 and 23 are directly loaded in the CPU 43 via the A/D converter 42. The CPU 43 then executes processing similar to that described in Figures 3 and 4 to drive the thyrister 34 via the gate circuit 44 in order to control the phase of power supplied to the fixed coil 4, which is a heater, while outputting a required alarm or display.

As described above, according to the present invention, even if an error occurs in the particular temperature detection element for control, the apparatus can switch to another temperature detection element to continue operation. This eliminates the need for a cumbersome operation in which the heating roller is temporarily stopped to enable inspection of the temperature detection element and in which synthetic yarns are sucked from the upstream side and, after the inspection, are passed through the heating roller as well as the downstream side take-up machine. The defective temperature detection element may be inspected during a maintenance while the machine is completely stopped.

According to the present invention, the error detection means and switching means are integrated into the central processing unit as programs and shared by the plurality of temperature detection elements. Therefore, depending on the program in the central processing unit, signals from the plurality of temperature detection elements can be arbitrarily combined to detect an error in the temperature detection elements or to switch among them.

According to the present invention, the outputs from the plurality of temperature detection elements are compared to detect an error in a particular temperature detection element. Consequently, errors can be detected simply and reliably.

According to the present invention, the operator can determine whether a particular temperature detection element is normal in order to take appropriate action at an appropriate time.

According to the present invention, the outputs from the plurality of temperature detection elements can be processed simply without the use of a calculation means such as a CPU on the rotary side.

According to the present invention, the offset value is varied for each temperature detection element, so the output from each temperature detection element can be distinguished even if the signal is continuous in a time sharing manner.

According to the present invention, an error in the heater or an increase in the temperature of the bearing can be detected while normal temperature control is being provided using the temperature detection element for control.

## Claims

1. A temperature control apparatus for a heating roller that guides yarns wound around the outer circumference of a roller with a heating means in order to heat the yarns, characterized in that the control apparatus comprises a plurality of temperature detection elements for detecting the temperature of said roller, and a control means for controlling the temperature of said heating means using the outputs from one or more of said temperature detection elements, the control means comprising an error detection means for detecting an error in said temperature detection elements, and a switching means operative when said error detection means detects an error in a particular temperature detection element in order to continue controlling the temperature of said heating means using the output from the other temperature detection element.

2. A temperature control apparatus for a heating roller as in claim 1 characterized in that said error detection means and said switching means are shared by said plurality of temperature detection elements.

3. A temperature control apparatus for a heating roller as in claim 1 or claim 2 characterized in that said error detection means compares the outputs from the plurality of temperature detection elements to detect an error in said particular temperature detection element.

4. A temperature control apparatus for a heating roller as in any one of claims 1 to 3 characterized in that said control means includes a means for informing that, after said error detection means has detected an error in said particular detection element, the control means has switched to temperature control using the other temperature detection element.

5. A temperature control apparatus for a heating roller as in any one of claims 1 to 4 characterized in that the apparatus includes an optical transmitter-receiver in which a signal is transmitted between a rotary side and a fixed side, and which continuously transmits the outputs from said plurality of temperature detection elements in a time sharing manner.

6. A temperature control apparatus for a heating roller as in claim 5 characterized in that the apparatus includes a switch means for sequentially switching the outputs from said plurality of temperature detection elements to obtain one of said outputs and a resistance switching section for varying the offset value of the output from each temperature detection element in response to said switch means.

7. A temperature control apparatus for a heating roller as in any one of claims 1 to 6 characterized in that said plurality of temperature detection elements are used for temperature control, error detection, and bearing temperature monitoring.
